(19) Europäisches Patentamt
European Patent Office
Office européen des brevets

(11) **EP 4 089 870 A1**

(12) **EUROPÄISCHE PATENTANMELDUNG**

(43) Veröffentlichungstag:
**16.11.2022  Patentblatt 2022/46**

(21) Anmeldenummer: **21173574.1**

(22) Anmeldetag: **12.05.2021**

(51) Internationale Patentklassifikation (IPC):
**H02J 3/00** (2006.01)      **H02J 13/00** (2006.01)

(52) Gemeinsame Patentklassifikation (CPC):
**H02J 3/00; H02J 13/00002;** H02J 2203/10;
H02J 2203/20

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Siemens AG Österreich**
**1210 Wien (AT)**

(72) Erfinder:
• **Valerio, Danilo**
  **1230 Wien (AT)**
• **Engelbrecht, Gerhard**
  **1050 Wien (AT)**

(74) Vertreter: **Maier, Daniel Oliver**
**Siemens AG**
**Postfach 22 16 34**
**80506 München (DE)**

(54) **VERFAHREN ZUR EFFIZIENTEN BESTIMMUNG EINES NETZPARAMETERS EINES ENERGIEVERSORGUNGSNETZES**

(57)    Computer-implementiertes Verfahren zur effizienten Bestimmung eines Netzparameters eines Energieversorgungsnetzes (1), wobei folgende Schritte ausgeführt werden:
a) Definieren einer Gesamtmenge von Smartmetern des Energieversorgungsnetzes,
b) Erzeugen eines Regressionsmodells für die in der Gesamtmenge enthaltenen Smartmeter,
c) Bilden einer ersten und zumindest einer zweiten Teilmenge der Gesamtmenge und Bestimmen eines jeweiligen Genauigkeits-Indikators hinsichtlich des Netzparameters mithilfe des Regressionsmodells für die erste und die zumindest eine zweite Teilmenge,
d) Auswählen der Teilmenge mit der höheren Genauigkeit aus der ersten und der zumindest einen zweiten Teilmenge mithilfe des jeweiligen Genauigkeits-Indikators, und Festlegen der ausgewählten Teilmenge als neue Gesamtmenge,
e) Fortfahren mit Schritt b) bis ein vordefiniertes Kriterium hinsichtlich des Genauigkeits-Indikators erfüllt ist.
f) Bestimmen des Netzparameters mithilfe der neuen Gesamtmenge.

FIG 1

EP 4 089 870 A1

**Beschreibung**

Die Erfindung betrifft ein computer-implementiertes Verfahren und eine Vorrichtung zur effizienten Bestimmung eines Netzparameters eines Energieversorgungsnetzes.

Die Erfindung betrifft ferner ein Computerprogramm, einen elektronisch lesbaren Datenträger und ein Datenträgersignal.

Ein Stromnetz ist ein Verbundnetz zur Lieferung von Strom von Erzeugern an Verbraucher.

Traditionell ist das Netz in ein Hochspannungsübertragungsnetz (HS-Netz) unterteilt, das den von großen Erzeugern, wie von Kraftwerken erzeugten Strom über große Entfernungen transportiert, und ein Niederspannungsverteilungsnetz (NS-Netz), welches die Endverteilung zu vielen kleineren Netzen und Verbrauchern bereitstellt, wie Haushalte oder Industriekunden.

Der Transport bzw. die Verteilung von Elektrizität kann auf verschiedenen Ebenen überwacht werden. In der Regel wird das HS-Netz umfassend überwacht, da eine Fehlfunktion in großen geografischen Gebieten zu schweren Ausfällen führen kann, während das NS-Netz im Allgemeinen nur in einigen wichtigen Bereichen überwacht wird.

Die Einführung erneuerbarer Energietechnologien und der Paradigmenwechsel hin zu einer dezentraleren Stromerzeugung haben das Niederspannungsnetz von einem reinen Verteilungsnetz zu einer komplexen Verbindung von Produzenten, Verbrauchern und Speichergeräten gemacht.

Diese Transformation stellt die vorhandene Infrastruktur in Frage und führt dazu, dass auch im NS-Netz eine detailliertere Überwachung erforderlich ist.

Obwohl ein "Smart-Metering" in erster Linie auf die Stromabrechnung abzielt, ist es auch möglich, den Energieverbrauch in einer Granularität von beispielsweise 15 Minuten zu überwachen.

Das Aggregieren von Smartmetern ermöglicht es dem Netzbetreiber, die Last an bestimmten Orten zu schätzen, wie an einem nicht überwachten Transformator.

Aufgrund strenger Datenschutzbestimmungen können detaillierte Smartmeter-Daten vom Netzbetreiber nur verwendet werden, wenn der Kunde eine ausdrückliche Zustimmung erteilt, dass seine Daten zu Überwachungszwecken verwendet werden dürfen.

Derzeit untersuchen Netzbetreiber die Frage: Wie viele Zustimmungen von Verbrauchern sind erforderlich, um die Netzlast zuverlässig und genau abzuschätzen?

Die Überwachung des vom Netz an einem bestimmten Ort übertragenen Stroms erfolgt normalerweise durch den Einsatz dedizierter Geräte, wie Netzüberwachungsgeräte (GMD).

Diese Geräte, auch "Phasor Measurement Unit" (PMU) genannt, erfassen und liefern in Echtzeit detaillierte Informationen über die Größe und den Phasenwinkel einer elektrischen Zeigergröße, wie Spannung oder Strom.

Der Investitions- und physische Bereitstellungsaufwand für zusätzliche Überwachungsgeräte im vorhandenen Niederspannungsnetz ist jedoch nicht realisierbar, und es wird nach Alternativen gesucht.

Es ist Aufgabe der Erfindung eine einfache und zuverlässige Lösung zur Bestimmung eines Netzparameters, insbesondere der elektrischen Last, des Energieversorgungsnetzes auf Basis von Smartmetern in einem Niederspannungsnetz bereitzustellen.

Die Aufgabe wird durch ein Verfahren eingangs genannter Art gelöst, wobei folgende Schritte ausgeführt werden:

a) Definieren einer Gesamtmenge von Smartmetern des Energieversorgungsnetzes,
b) Erzeugen eines Regressionsmodells für die in der Gesamtmenge enthaltenen Smartmeter,
c) Bilden einer ersten und zumindest einer zweiten Teilmenge der Gesamtmenge und Bestimmen eines jeweiligen Genauigkeits-Indikators hinsichtlich des Netzparameters mithilfe des Regressionsmodells für die erste und die zumindest eine zweite Teilmenge,
d) Auswählen der Teilmenge mit der höheren Genauigkeit aus der ersten und der zumindest einen zweiten Teilmenge mithilfe des jeweiligen Genauigkeits-Indikators, und Festlegen der ausgewählten Teilmenge als neue Gesamtmenge,
e) Fortfahren mit Schritt b) bis ein vordefiniertes Kriterium hinsichtlich des Genauigkeits-Indikators erfüllt ist.
f) Bestimmen des Netzparameters mithilfe der neuen Gesamtmenge.

Die Last, die an einem Netzsegment über die Zeit anliegt, hängt von der Energie ab, die von allen Verbrauchern benötigt wird, die von diesem Segment bedient werden.

In letzter Zeit werden immer mehr Wohneinheiten mit Smartmetern ausgestattet, die den Energieverbrauch auf Haushaltsebene kontinuierlich überwachen.

Die Erfassung von Smartmeter-Messungen in ausreichend detaillierten Intervallen erfolgt jedoch nur, wenn die Einwohner eine ausdrückliche Zustimmung unterzeichnen.

Mit anderen Worten, nicht alle Messungen sind beim Netzbetreiber verfügbar.

Eine Vorhersage ist jedoch möglich, wenn die Teilmenge der verfügbaren Smartmeter repräsentativ genug für die Gesamtbevölkerung ist.

Dies kann beispielsweise erfolgen durch:

- Abschätzen des Anteils an notwendigen Smartmetern zur Abschätzung der Netzlast unter einer vorgegebenen Schätzgenauigkeit,
- Bestimmen der repräsentativsten Teilmenge von Verbrauchern.

Dazu ist es erforderlich, für kurze Zeit Zugriff auf SM-Messungen von einer Reihe von Haushalten zu erhalten.

Dann werden die Messungen analysiert und daraus abgeleitet, welches oder welche Smartmeter erforderlich sind, um die Netzlast zuverlässig zu prognostizieren.

Durch das erfindungsgemäße Verfahren wird auf einfache und effiziente Weise erreicht, dass eine Menge an Smartmetern identifiziert werden kann, welche ein vorgegebenes Erfordernis hinsichtlich der Genauigkeit bei der Bestimmung des Netzparameters, wie die Netzlast, erfüllt.

Statt einer Analyse aller möglichen Permutationen von Smartmetern, welche allgemein zu komplex und aufwändig wäre, wird durch Zuhilfenahme eines Regressionsmodells eine Bestimmung der für die Genauigkeit des Netzparameters relevanten Smartmetern stark verkürzt und vereinfacht.

In einer Weiterbildung der Erfindung ist es vorgesehen, dass der Netzparameter die elektrische Last im Energieversorgungsnetz betrifft und vorzugsweise das Energieversorgungsnetz ein Niederspannungsnetz ist.

Es ist besonders günstig das erfindungsgemäße Verfahren auf die effiziente Bestimmung der Netzlast zu richten, da die Netzlast besonders zuverlässig und genau durch ein Regressionsmodell abgebildet werden kann.

In einer Weiterbildung der Erfindung ist es vorgesehen, dass der Genauigkeits-Indikator der mittlere absolute Fehler oder der mittlere absolute prozentuale Fehler ist.

Der mittlere absolute Fehler lässt sich auf eine einfache Weise bestimmen und kann im erfindungsgemäßen Verfahren dazu führen, dass die Berechnung besonders einfach und schnell durchgeführt wird.

In einer Weiterbildung der Erfindung ist es vorgesehen, dass die erste und die zumindest eine zweite Teilmenge dadurch gebildet werden, dass ein Smartmeter aus der Gesamtmenge entfernt wird.

Sogenanntes "selektives Entfernen" kann als eine Ausführungsform des erfindungsgemäßen Verfahrens folgendermaßen implementiert werden.

Selektives Entfernen:

Mithilfe des nachfolgenden Top-Down-Ansatzes wird eine Vorhersage erstellt, welche auf der gesamten Menge von Smartmetern basiert, und Schritt für Schritt ein Smartmeter aus der Menge selektiv entfernt, wobei jeweils der Genauigkeitsverlust gemessen wird.

Der Genauigkeitsverlust kann durch Anwendung eines Regressionsmodells für den Smartmeter ermittelt werden, beispielweise durch den mittleren absoluten Fehler (engl. "Mean Absolute Error") MAE des Regressionsmodells für das jeweilige Smartmeter.

Dazu muss das Regressionsmodell entsprechend erzeugt und trainiert werden.

Folgende Schritte werden beim selektiven Entfernen ausgeführt:

1a) Definieren einer Menge $S$ von Smartmetern:

$$S = \{SM_1, SM_2, \ldots, SM_i, \ldots, SM_N\}$$

1b) Erzeugen eines Regressionsmodells $y$ für die in der Menge $S$ enthaltenen Smartmeter $SM_1$, ..., $SM_N$:

$$y = f(x_{SM_i}), \qquad mit\ SM_i \in S$$

1c) Erzeugen zumindest einer Hilfs-Teilmenge $A_i$, ausgehend von der Menge $S$ und Entfernen eines Smartmeters $SM_i$, jeweils Bestimmen des mittleren absoluten Fehlers $MAE_i$ als Indikator für die Gesamt-Genauigkeit der in der jeweiligen Hilfs-Teilmenge $T_i$ enthaltenen Smartmeter mithilfe des Regressionsmodells $y$:

$$A_1 = \{\cancel{SM_1}, SM_2, \ldots, SM_i, \ldots, SM_N\} \rightarrow MAE_1$$

$$A_2 = \{SM_1, \cancel{SM_2}, \ldots, SM_i, \ldots, SM_N\} \rightarrow MAE_2$$

$$A_i = \{SM_1, SM_2, \ldots, \cancel{SM_i}, \ldots, SM_N\} \rightarrow MAE_i$$

$$A_N = \{SM_1, SM_2, \ldots, SM_i, \ldots, \cancel{SM_N}\} \rightarrow MAE_N$$

1d) Entfernen eines Smartmeters $SM_k$ aus der Menge $S$, welches beim Entfernen die geringste Reduktion der im Schritt 1c) ermittelten jeweiligen Gesamt-Genauigkeit induziert:

$$S := S - \{SM_k\}, \qquad mit \ k = \arg\min_i(MAE_i)$$

1e) Fortfahren mit Schritt 1b) bis die Menge $S$ leer ist, oder ein vordefiniertes Kriterium hinsichtlich der Gesamt-Genauigkeit (z.B. Zielwert für den mittleren absoluten Fehler $MAE$ oder den mittleren absoluten prozentualen Fehler MAPE) erreicht ist.

In einer Weiterbildung der Erfindung ist es vorgesehen, dass die erste und die zumindest eine zweite Teilmenge dadurch gebildet wird, dass im Schritt a) zusätzlich zumindest eine leere Hilfsmenge gebildet wird, und die erste und die zumindest eine zweite Teilmenge aus der Hilfsmenge dadurch gebildet wird, dass ein Smartmeter aus der Gesamtmenge zu der zumindest einen Hilfsmenge hinzugefügt wird.
Sogenanntes "selektives Hinzufügen" kann als weitere bevorzugte Ausführungsform des erfindungsgemäßen Verfahrens folgendermaßen implementiert werden.

Selektives Hinzufügen:

Mithilfe des nachfolgenden Bottom-up-Ansatzes wird eine Vorhersage der Last durch einen einzelnen Smartmeter erstellt, und Schritt für Schritt ein Smartmeter aus der Menge selektiv hinzugefügt, wobei jeweils die Genauigkeitsverbesserung gemessen wird, beispielsweise mithilfe des Regressionsmodells für den jeweiligen Smartmeter.
Folgende Schritte werden beim selektiven Hinzufügen ausgeführt:

2a) Definieren einer Menge $S$ von Smartmetern und einer leeren Hilfsmenge $C$:

$$S = \{SM_1, SM_2, \ldots, SM_i, \ldots, SM_N\}$$
$$C = \{\}$$

2b) Erzeugen eines Regressionsmodells y für die in der Menge $S$ enthaltenen Smartmeter $SM_1$, ..., $SM_N$:

$$y = f(x_{SM_i}), \qquad mit \ SM_i \in S$$

2c) Erzeugen zumindest einer Hilfs-Teilmenge $B_i$, ausgehend von der Hilfsmenge $C$ und Hinzufügen eines Smartmeters $SM_i$ aus der Menge $S$, jeweils Bestimmen des mittleren absoluten Fehlers $MAE_i$ als Indikator für die Gesamt-Genauigkeit der in der zumindest einen Hilfs-Teilmenge $B_i$ enthaltenen Smartmeter mithilfe des Regressionsmodells y:

$$B_1 = C + \{SM_1\} \rightarrow MAE_1$$

$$B_2 = C + \{SM_2\} \rightarrow MAE_2$$

$$B_i = C + \{SM_i\} \rightarrow MAE_i$$

$$B = C + \{SM_N\} \rightarrow MAE_N$$

2d) Hinzufügen des Smartmeters $SM_k$ aus der Menge $S$ zur Hilfsmenge $C$, welches beim Hinzufügen die größte Vergrößerung der Genauigkeit induziert und Entfernen aus der Menge $S$:

$$C := C + \{SM_k\}$$
$$S := S - \{SM_k\}, \qquad mit\ k = \arg\min_i(MAE_i)$$

2e) Fortfahren mit Schritt 2b) bis die Menge $S$ leer ist, oder ein vordefiniertes Kriterium hinsichtlich der Gesamt-Genauigkeit (z.B. Zielwert für den mittleren absoluten Fehler MAE oder den mittleren absoluten prozentualen Fehler MAPE) erreicht ist.

Die erfindungsgemäße Aufgabe wird auch durch eine Vorrichtung zur effizienten Bestimmung eines Netzparameters eines Energieversorgungsnetzes gelöst, welches Smartmeter aufweist, umfassend eine Rechenvorrichtung mit einem Speicher, gelöst, welche dazu eingerichtet ist, das erfindungsgemäße Verfahren auszuführen.

Die erfindungsgemäße Aufgabe wird auch durch ein Computerprogramm gelöst, umfassend Befehle, welche bei deren Ausführung durch einen Computer diesen veranlassen, das erfindungsgemäße Verfahren auszuführen.

Die erfindungsgemäße Aufgabe wird auch durch einen elektronisch lesbaren Datenträger mit darauf gespeicherten lesbaren Steuerinformationen gelöst, welche zumindest das erfindungsgemäße Computerprogramm umfassen und derart ausgestaltet sind, dass sie bei Verwendung des Datenträgers in einer Recheneinrichtung das erfindungsgemäße Verfahren durchführen.

Die erfindungsgemäße Aufgabe wird auch durch ein Datenträgersignal gelöst, welches das erfindungsgemäße Computerprogramm überträgt.

Die Erfindung wird nachfolgend anhand der in den beigeschlossenen Zeichnungen dargestellten Ausführungsbeispielen näher erläutert. In den Zeichnungen zeigt:

Fig. 1    eine schematische Darstellung der erfindungsgemäßen Vorrichtung,

Fig. 2    eine Darstellung der Genauigkeit bei Anwendung von selektivem Entfernen,

Fig. 3    eine Ausschnitts-Vergrößerung der Fig. 2,

Fig. 4    eine Darstellung der Genauigkeit bei Anwendung von selektivem Hinzufügen,

Fig. 5    eine Ausschnitts-Vergrößerung der Fig. 4,

Fig. 6    den Genauigkeitsverlauf bei zufälliger Auswahl,

Fig. 7    den Genauigkeitsverlauf bei suboptimaler Auswahl.

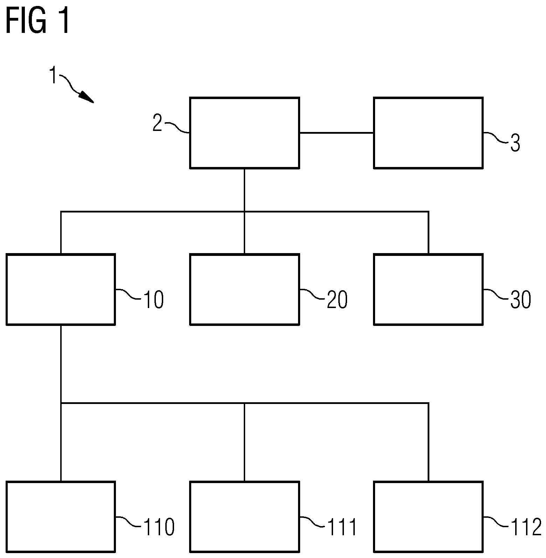

**Fig. 1** stellt schematisch die erfindungsgemäße Vorrichtung dar.

Es ist ein Energieversorgungssystem 1 mit einem Gateway 2 und einer erfindungsgemäßen Überwachungsvorrichtung 3 dargestellt, wobei die Überwachungsvorrichtung 3 eine Rechenvorrichtung mit einem Speicher aufweist und welche dazu eingerichtet ist, das erfindungsgemäße Verfahren auszuführen.

Das Energieversorgungssystem 1 weist Smartmeter 10, 20, 30 und 110-112 in unterschiedlichen Hierarchieebenen auf, welche über das Gateway 2 miteinander kommunizieren könne, beispielsweise mittels "powerline communication".

Die Smartmeter 10, 20, 30 und 110-112 sind jeweils dazu eingerichtet, Netzparameter des Energieversorgungsnetzes 1, wie den Energieverbrauch eines angeschlossenen Haushaltes unter Angabe einer entsprechenden Genauigkeit, zu bestimmen.

Die Ausgabe der oben beschriebenen Algorithmen ist eine Menge von N Modellen, die immer mit der optimalen Auswahl von Smartmetern berechnet werden.

Für jedes Modell können folgenden Informationen gesammelt werden: der minimale mittlere absolute Fehler MAE, eine Anzahl der Smartmeter NSM und eine Liste dieser Smartmeter.

Bei einer Anforderung in Bezug auf den minimalen mittleren absolute Fehler MAE ist es möglich, ein erstes Modell auszuwählen, das die Anforderung erfüllt, und dann ferner zu ermitteln, wie viele und welche Smartmeter dazu erforderlich sind.

Für die obigen Algorithmen sollten immer die repräsentativsten Smartmeter ausgewählt werden, das heißt der erhaltene minimale mittlere absolute Fehler MAE ist das Ergebnis einer optimalen Auswahl.

Ein Beispiel für diese Ausgabe finden Sie im Abschnitt mit den experimentellen Ergebnissen.

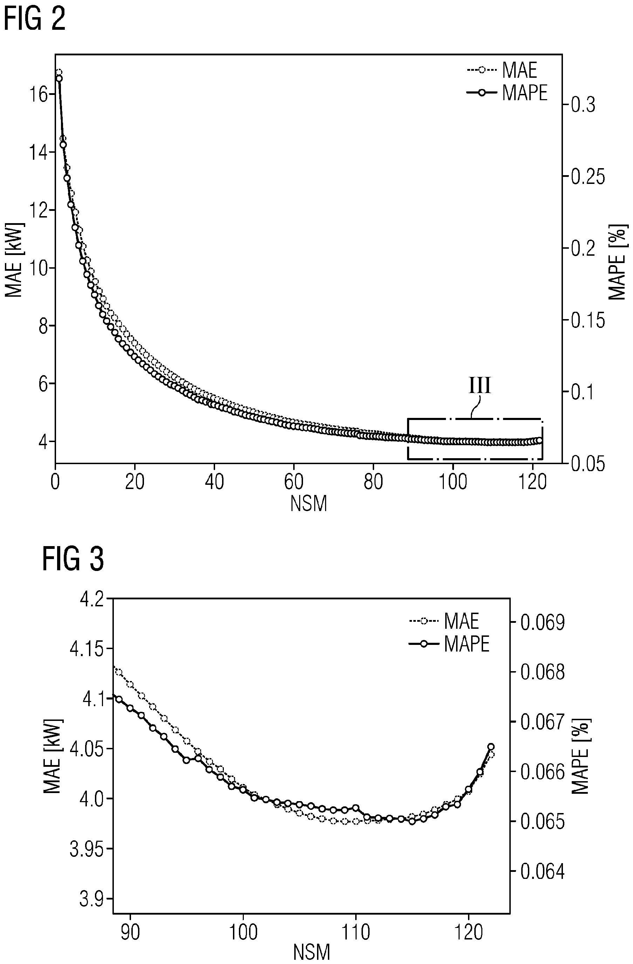

**Fig. 2** zeigt eine Darstellung der Genauigkeit bei Anwendung von selektivem Entfernen.

Der Darstellung liegen 122 Smartmeter zugrunde, welche in etwa 50% der Haushalte im Energieversorgungsnetz 1 abdecken.

Aus der Anzahl von 122 Smartmetern ergibt sich eine Bestimmung von 7503 Regressionsmodellen.

Durch eine lineare Regression und einen gewöhnlichen Computer konnte das Verfahren in nur 13 Minuten ausgeführt werden.

Die horizontale Achse gibt die Anzahl der Smartmeter an, die zur Schätzung der Netzlast verwendet werden.

Die vertikale Achse repräsentiert die Genauigkeit der Vorhersage in Bezug auf den mittleren absoluten Fehler MAE. Ausgehend von rechts leistet das Modell mit 122 Smartmetern einen mittleren absoluten Fehler MAE von 4,04 kW.

Durch Reduzieren der Menge der Smartmetern nimmt der mittlere absolute Fehler MAE zunächst ab und beginnt dann exponentiell zuzunehmen.

Die anfängliche Abnahme legt nahe, dass es ein Dutzend Smartmeter gibt, die besonders untypisch sind, das heißt, wenn sie in der Vorhersage berücksichtigt werden, hat dies nachteilige Auswirkungen auf die Genauigkeit.

Im Allgemeinen kann die Kurve folgendermaßen gelesen werden.

Man legt einen gewünschten mittleren absoluten Fehler MAE fest und überprüft, wie viele Smartmeter erforderlich waren, um diesen mittleren absoluten Fehler MAE unter der Annahme einer optimalen Auswahl zu erreichen.

Zum Beispiel kann ein mittleren absoluten Fehler MAE von 6 kW erreicht werden, indem nur die 30 repräsentativsten Smartmeter berücksichtigt werden.

Dies entspricht weniger als 15% der gesamten Haushalte.

**Fig. 3** zeigt einen vergrößerten Ausschnitt III der Fig. 2.

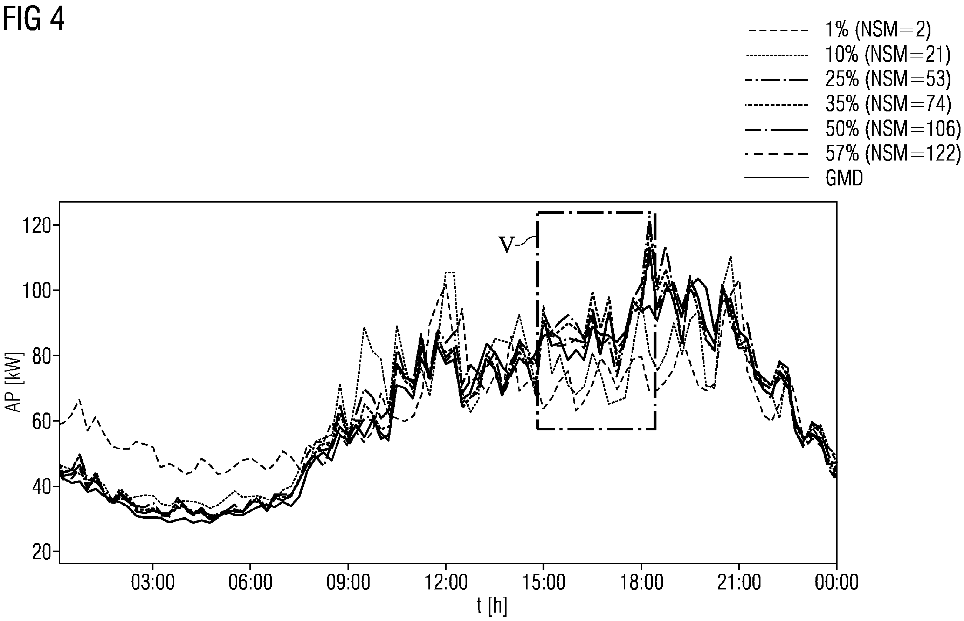

**Fig. 4** zeigt eine Darstellung der Genauigkeit bei Anwendung von selektivem Hinzufügen. Dargestellt ist die durchschnittliche Leistung AP (engl. "average power") über die Zeit t.

In der Figur ist ein qualitatives Beispiel für eine Vorhersage mit unterschiedlicher Anzahl von SMs dargestellt.

Die GMD-Linie (Stromnetz-Messgerät, engl. "grid monitoring device") zeigt die tatsächlich gemessene Netzlast. Die unterschiedlichen Grauintensitäten geben an, wie viele SMs für die Vorhersage berücksichtigt wurden.

Die maximale Anzahl verfügbarer Smartmeter entspricht 57% der Haushalte.

Die in der Figur eingezeichneten Linien zeigen die vorhergesagten Werte mit 57%, 50%, 35%, 25%, 10% und 1% der SMs.

Je kleiner die Anzahl der SMs ist, desto stärker weicht die Kurve von den tatsächlichen Messungen ab.

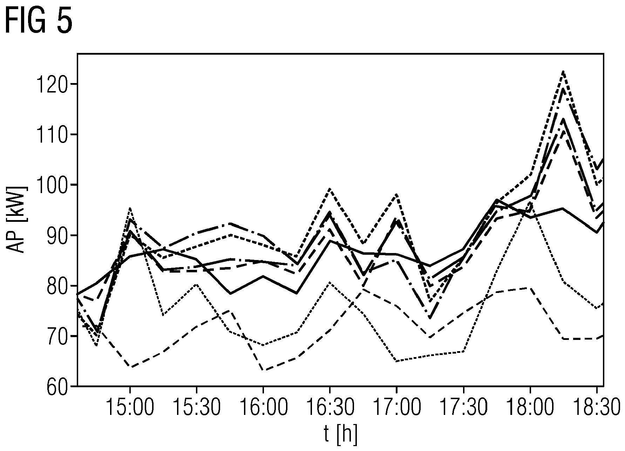

**Fig. 5** zeigt einen vergrößerten Ausschnitt V der Fig. 4.

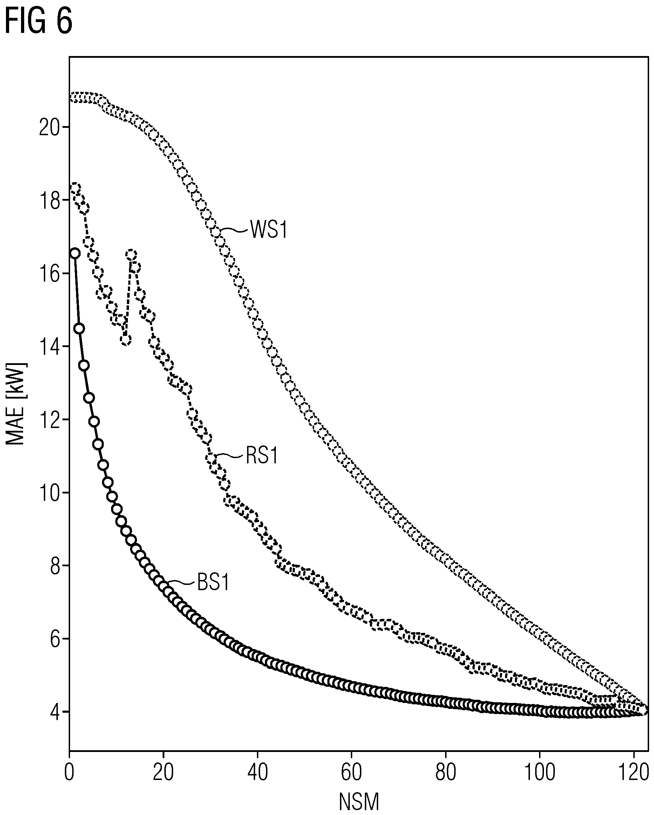

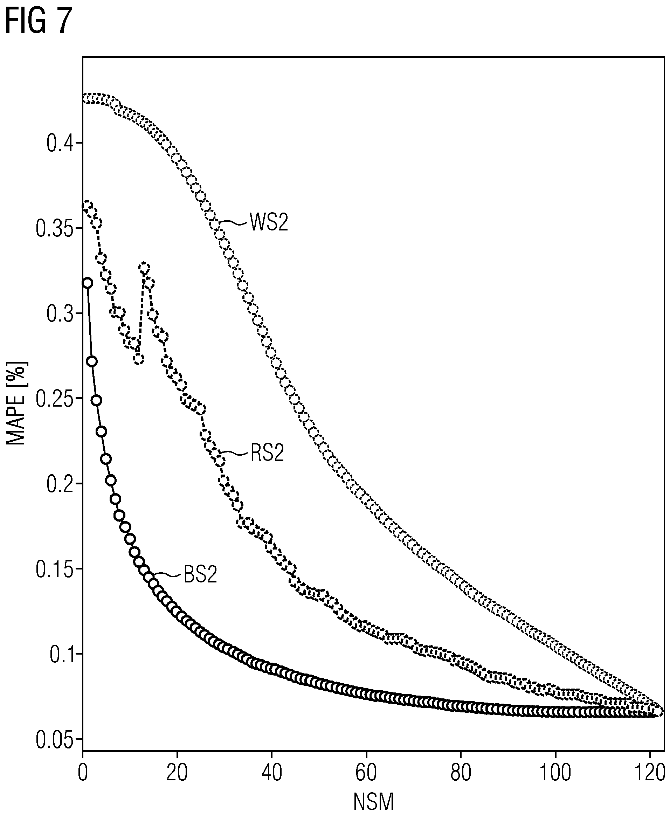

**Fig. 6** und **Fig. 7** stellen den Genauigkeitsverlauf bei zufälliger Auswahl beziehungsweise bei suboptimaler Auswahl dar.

Die Kurven BS1 beziehungsweise BS2 für die "optimale Auswahl" zeigen das Verhalten, welches mit dem erfindungsgemäßen Verfahren erstellt wurde.

Die Kurven WS1 beziehungsweise WS2 für die schlechteste Auswahl ("worst selection") zeigen was passiert, wenn eine Vorhersage mit N Smartmetern die am wenigsten repräsentativ sind, durchgeführt wird.

Die Kurve RS1 beziehungsweise RS2 für eine zufällige Auswahl ("random selection") zeigen stattdessen was passiert, wenn die Auswahl der SMs zufällig erfolgt.

Der Bereich in Fig. 6 zwischen den Kurven WS1 und BS1 ist der Bereich möglicher mittlerer absoluter Fehler MAE gezeigt, der sich durch eine beliebige Auswahl an Smartmetern ergibt.

Der Bereich in Fig. 7 zwischen den Kurven WS2 und BS2 ist der Bereich möglicher mittlerer absoluter prozentualer Fehler MAPE gezeigt, der sich durch eine beliebige Auswahl an Smartmetern ergibt.

Durch Festlegen der vertikalen Achse kann die maximale und minimale MAE / MAPE ermittelt werden, die mit einer bestimmten Anzahl von SMs erreicht werden kann.

Zum Beispiel kann man mit 60 Smartmetern einen mittleren absoluten Fehler MAE von etwa 5kW erhalten, indem man die repräsentativsten Smartmeter auswählt.

Ein mittlerer absoluter Fehler MAE von etwa 11kW kann erhalten werden, indem man die am wenigsten repräsentativen Smartmeter auswählt.

Diese Informationen sind besonders dann interessant, wenn eine Anforderung in Bezug auf den mittlerer absoluter Fehler MAE gegeben ist und entschieden werden muss, ob ein bestimmtes Auswahlschema angewandt werden muss.

**Bezugszeichenliste:**

| | |
|---|---|
| 1 | Energieversorgungssystem |
| 2 | Gateway |
| 3 | Überwachungsvorrichtung |
| 10, 20, 30, 110-112 | Smartmeter |
| WS1, WS2 | schlechteste Auswahl (engl. "worst selection") |
| RS1, RS2 | zufällige Auswahl (engl. "random selection") |
| BS1, BS2 | beste Auswahl ("best selection") |
| NSM | Anzahl Smartmeter |
| MAE | mittlerer absoluter Fehler (engl. "mean absolute error") |
| MAPE | mittlerer absoluter prozentualer Fehler (engl. "mean absolute percentage error") |
| AP | durchschnittliche Leistung (engl. "average power") |
| GMD | Stromnetz Messgerät (engl. "grid monitoring device") |
| t | Zeitachse |

**Patentansprüche**

1. Computer-implementiertes Verfahren zur effizienten Bestimmung eines Netzparameters eines Energieversorgungsnetzes (1), **gekennzeichnet durch** folgende Schritte:

   a) Definieren einer Gesamtmenge (10, 20, 30, 110-112) von Smartmetern des Energieversorgungsnetzes,
   b) Erzeugen eines Regressionsmodells für die in der Gesamtmenge (10, 20, 30, 110-112) enthaltenen Smartmeter,
   c) Bilden einer ersten und zumindest einer zweiten Teilmenge der Gesamtmenge und Bestimmen eines jeweiligen Genauigkeits-Indikators hinsichtlich des Netzparameters mithilfe des Regressionsmodells für die erste und die zumindest eine zweite Teilmenge,
   d) Auswählen der Teilmenge mit der höheren Genauigkeit aus der ersten und der zumindest einen zweiten Teilmenge mithilfe des jeweiligen Genauigkeits-Indikators (MAE, MAPE), und Festlegen der ausgewählten Teilmenge als neue Gesamtmenge,
   e) Fortfahren mit Schritt b) bis ein vordefiniertes Kriterium hinsichtlich des Genauigkeits-Indikators (MAE, MAPE) erfüllt ist.
   f) Bestimmen des Netzparameters mithilfe der neuen Gesamtmenge.

2. Verfahren nach dem vorhergehenden Anspruch, wobei der der Netzparameter die Höhe der elektrischen Last im Energieversorgungsnetz betrifft und vorzugsweise das Energieversorgungsnetz ein Niederspannungsnetz ist.

3. Verfahren nach einem der vorhergehenden Ansprüche, wobei der Genauigkeits-Indikator der mittlere absolute Fehler (MAE) oder der mittlere absolute prozentuale Fehler (MAPE) ist.

4. Verfahren nach einem der Ansprüche 1 bis 3, wobei die erste und die zumindest eine zweite Teilmenge dadurch gebildet ist, dass ein Smartmeter aus der Gesamtmenge (10, 20, 30, 110-112) entfernt wird.

5. Verfahren nach einem der Ansprüche 1 bis 3, wobei die erste und die zumindest eine zweite Teilmenge dadurch gebildet ist, dass im Schritt a) zusätzlich zumindest eine leere Hilfsmenge gebildet wird, und die erste und die zumindest eine zweite Teilmenge aus der Hilfsmenge dadurch gebildet wird, dass ein Smartmeter aus der Gesamtmenge (10, 20, 30, 110-112) zu der zumindest einen Hilfsmenge hinzugefügt wird.

6. Vorrichtung zur effizienten Bestimmung eines Netzparameters eines Energieversorgungsnetzes, welches Smartmeter aufweist, umfassend eine Rechenvorrichtung mit einem Speicher, **dadurch gekennzeichnet, dass** die Vorrichtung dazu eingerichtet ist, das erfindungsgemäße Verfahren auszuführen.

7. Computerprogramm, umfassend Befehle, welche bei deren Ausführung durch einen Computer diesen veranlassen, das Verfahren nach einem der Ansprüche 1 bis 5 auszuführen.

8. Elektronisch lesbarer Datenträger mit darauf gespeicherten lesbaren Steuerinformationen, welche zumindest das Computerprogramm nach dem vorhergehenden Anspruch umfassen und derart ausgestaltet sind, dass sie bei Verwendung des Datenträgers in einer Recheneinrichtung das Verfahren nach einem der Ansprüche 1 bis 5 durchführen.

9. Datenträgersignal, welches das Computerprogramm nach Anspruch 7 überträgt.

FIG 1

## FIG 2

## FIG 3

**FIG 4**

Legend:
- 1% (NSM=2)
- 10% (NSM=21)
- 25% (NSM=53)
- 35% (NSM=74)
- 50% (NSM=106)
- 57% (NSM=122)
- GMD

EP 4 089 870 A1

FIG 5

FIG 6

FIG 7

EP 4 089 870 A1

Europäisches Patentamt

European Patent Office

Office européen des brevets

**EUROPÄISCHER RECHERCHENBERICHT**

Nummer der Anmeldung

EP 21 17 3574

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 110 659 699 A (UNIV CHONGQING) 7. Januar 2020 (2020-01-07) * Absätze [0004] - [0164]; Abbildung 2 * ----- | 1-9 | INV. H02J3/00 H02J13/00 |
| X | US 8 742 959 B1 (EFROS PAVEL [DE] ET AL) 3. Juni 2014 (2014-06-03) * Spalten 1-4; Abbildungen 1-10 * ----- | 1-9 | |
| X | US 2018/166878 A1 (HOOSHMAND ALI [US] ET AL) 14. Juni 2018 (2018-06-14) * Absätze [0002] - [0006], [0036] - [0046]; Abbildungen 1-6 * ----- | 1-9 | |
| X | US 2015/161233 A1 (FLORA JUNE [US] ET AL) 11. Juni 2015 (2015-06-11) * Absätze [0003] - [0033]; Abbildungen 1-7 * ----- | 1-9 | |
| A | CN 108 846 530 A (STATE GRID SHANGHAI MUNICIPAL ELECTRIC POWER CO) 20. November 2018 (2018-11-20) * Absätze [0001] - [0050]; Abbildungen 1,2 * ----- | 1-9 | |

RECHERCHIERTE SACHGEBIETE (IPC)

H02J

Der vorliegende Recherchenbericht wurde für alle Patentansprüche erstellt

| Recherchenort | Abschlußdatum der Recherche | Prüfer |
|---|---|---|
| München | 2. November 2021 | Krasser, Bernhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.........................................................................................................
& : Mitglied der gleichen Patentfamilie, übereinstimmendes Dokument

EPO FORM 1503 03.82 (P04C03)

15

**ANHANG ZUM EUROPÄISCHEN RECHERCHENBERICHT
ÜBER DIE EUROPÄISCHE PATENTANMELDUNG NR.**

EP 21 17 3574

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-11-2021

| Im Recherchenbericht angeführtes Patentdokument | Datum der Veröffentlichung | Mitglied(er) der Patentfamilie | Datum der Veröffentlichung |
|---|---|---|---|
| CN 110659699 A | 07-01-2020 | KEINE | |
| US 8742959 B1 | 03-06-2014 | KEINE | |
| US 2018166878 A1 | 14-06-2018 | US 2018166878 A1<br>US 2018166880 A1 | 14-06-2018<br>14-06-2018 |
| US 2015161233 A1 | 11-06-2015 | US 2015161233 A1<br>US 2015186827 A1 | 11-06-2015<br>02-07-2015 |
| CN 108846530 A | 20-11-2018 | KEINE | |

EPO FORM P0461

Für nähere Einzelheiten zu diesem Anhang : siehe Amtsblatt des Europäischen Patentamts, Nr.12/82